# EUROPÄISCHE PATENTANMELDUNG

(11) **EP 1 035 720 A2**
(43) Veröffentlichungstag der Anmeldung: **13.09.2000**
(21) Anmeldenummer: 00100520.6
(22) Anmeldetag: 12.01.2000
(51) Int. Cl.: H04M 11/02

(54) **Vorrichtung zum Prüfen der Funktionsfähigkeit einer mit einer TK-Anlage gekoppelten Türfreisprecheinrichtung**

(30) Priorität: 11.03.1999 DE 19910749
(71) Anmelder: Deutsche Telekom AG, 53113 Bonn (DE)
(72) Erfinder: Fischer, Jürgen, 71229 Leonberg (DE); Glas, Maximilian, 71032 Böblingen (DE)

(57) **Zusammenfassung**

Die Erfindung betrifft eine Vorrichtung zum Prüfen der Funktionsfähigkeit einer Türfreisprecheinrichtung, welche als ein mit einer TK-Anlage verbundener TFE-Adapter ausgebildet ist.
Ihr liegt die Aufgabe zugrunde, eine Prüfvorrichtung zu schaffen, die eine einfache und schnelle Funktionsprüfung ermöglicht, dabei einen einfachen Aufbau besitzt, und die Durchführung der Prüfung im wesentlichen durch einen Techniker ermöglicht.
Zur Lösung der Aufgabe ist die Vorrichtung als ein Prüfadapter ausgebildet, der unmittelbar mit den Kontakten des TFE-Adapters verbindbar ist und in sich zumindest Schaltungsteile zur Polaritätsprüfung, zur Last- und Versorgungsspannungsprüfung, zur Prüfung der Sprechverbindung zwischen dem TFE-Adapter und einer an die TK-Anlage angeschlossenen Fernsprechendeinrichtung sowie zur Prüfung der Klingel- und Türöffnerfunktionalität vereinigt. Der Adapter ist dabei so ausgebildet, die als Türrufzielstelle dienende Fernsprechendeinrichtung in die Prüfung der Funktionen des TFE-Adapters einbezogen ist und der Prüfadapter zur Bereitstellung der für den Betrieb seiner Schaltungsteile erforderlichen Versorgungsspannung eine Stabilisatorschaltung umfaßt, welche ihre stabilisierte Ausgangsspannung aus der Versorgungsspannung des TFE-Adapters gewinnt.

## Beschreibung

Die Erfindung betrifft eine Vorrichtung zum Prüfen der Funktionsfähigkeit einer Türfreisprecheinrichtung, welche als ein mit einer TK-Anlage verbundener TFE-Adapter mit Kontakten zum Anschluß einzelner Funktionselemente, wie Klingeltaster, Türlautsprecher und Türöffnerkontakt, ausgebildet ist.

Es ist bekannt, in größeren Bürokomplexen Einrichtungen zur Anmeldung und zum Einlaß von Besuchern in Form von Türfreisprecheinrichtungen zu realisieren, welche eine Kommunikation mit dem Besucher und die fernbediente Betätigung eines Türöffners von einem dafür vorgesehenen Platz in dem Bürogebäude ermöglichen. Dies kann beispielsweise vom Büro eines Pförtners geschehen. Da die Person, welche eine solche Anlage bedient, im allgemeinen weitere Aufgaben zu erfüllen hat, so in aller Regel auch die Annahme von Telefonaten oder deren Weiterleitung, lag es nahe, die hierfür vorhandene Fernsprechendeinrichtung in der Weise multifünktionell auszubilden, daß sie mit einer Türfreisprecheinrichtung gekoppelt, auch deren Bedienung ermöglicht. Solchermaßen erfüllt die Fernsprechendeinrichtung, die Funktionen eines herkömmlichen Telefons sowie einer Gegensprechanlage und Fernbedienung für die Türeinlaßstelle. Um die Kombination eines Telefons mit einem Türöffner zu bewerkstelligen, bedarf es eines entsprechenden Adapters, eines sogenannten TFE-Adapters. Dieser Adapter wird mit der TK-Anlage verbunden und stellt auf der anderen Seite Kontakte zur Ausgabe und Annahme von Signalen zur und von der Tür bereit. Oft sind dabei sowohl das gleichzeitig als Türöffner fingierende Telefon und die in der angegebenen Weise fernbediente Tür als auch das Telefon und die eine Mehrzahl anderer Fernsprechendeinrichtungen mit dem Amtsnetz verbindende TK-Anlage weit voneinander entfernt oder liegen zumindest untereinander außerhalb des Sichtbereichs.

Aufgrund dieser Gegebenheiten gestaltet sich die Überprüfung der Funktionsfähigkeit eines Adapters, insbesondere, wenn die Prüfung bei noch nicht installierter Türsprech- und Türöffnereinrichtung erfolgen soll, teilweise schwierig.
Nach dem Stand der Technik benötigt ein mit dieser Aufgabe betrauter Techniker hierfür eine Vielzahl geeigneter Instrumente Außerdem kann er viele Prüfvorgänge aufgrund der meist zwischen der TK-Anlage und der Fernsprechendeinrichtung bestehenden räumlichen Distanz nicht alleine vornehmen.
Aus der DE 195 45 239 ist ein Universal-Prüfgerät für eine Telekommunikationseinrichtung bekannt. Das Gerät vereinigt in sich gemäß der in der Schrift dargestellten Lösung eine Vielzahl von Meß- und Prüfgeräten. Zur Koordination der einzelnen Prüfvorgänge und zum Erhalt einer hohen Flexibilität ist das Prüfgerät mit einem Mikrocontroller ausgestattet. Die dargestellte Lösung ist jedoch trotz der Flexibilität nicht zur Überprüfung einer mit einer TK-Anlage gekoppelten Türfreisprecheinrichtung geeignet. Außerdem ist die vorgestellte Lösung vergleichsweise aufwendig und daher teuer. Zur Prüfung, insbesondere einer in ISDN-Technik ausgelegten TK-Anlage ist dieser Aufwand zwar möglicherweise gerechtfertigt, jedoch kommt es bei der Prüfung einer Türfreisprecheinrichtung im allgemeinen nur auf eine grundsätzliche Funktionsprüfung an, bei der insbesondere exakte Meßwerte nicht erforderlich sind.

Der vorliegenden Erfindung liegt die Aufgabe zugrunde, eine Prüfvorrichtung zum Prüfen der Funktionsfähigkeit einer mit einer TK-Anlage gekoppelten Türfreisprecheinrichtung zu schaffen, die eine einfache und schnelle Funktionsprüfung ermöglicht, dabei einen einfachen Aufbau besitzt, und die Durchführung der Prüfung im wesentlichen durch einen Techniker ermöglicht.
Die Aufgabe wird durch eine Vorrichtung zum Prufen mit den Merkmalen des Hauptanspruchs gelöst. Vorteilhafte Ausgestaltungen der erfindungsgemäßen Losung sind durch die Unteransprüche gegeben.

Die erfindungsgemäße Vorrichtung zum Prüfen der Funktionsfähigkeit einer Türfreisprecheinrichtung, in der Form eines mit einer TK-Anlage verbundenen TFE-Adapters ist als ein Prüfadapter ausgebildet, der unmittelbar mit den dem Anschluß der Funktionselemente dienenden Kontakten des TFE-Adapters verbindbar ist und in sich zumindest die nachfolgend genannten Schaltungsteile vereinigt.
a) Einen Schaltungsteil zur Polaritätsprüfung der von der TK-Anlage auf Kontakte des TFE-Adapters durchgeschalteten Fernsprechadern a,b;
b) Einen Schaltungsteil zur Last- und Versorgungsspannungsprüfung;
c) Einen Schaltungsteil zur Prüfung der Sprechverbindung zwischen dem TFE-Adapter und einer an die TK-Anlage angeschlossenen, als Türrufzielstelle dienenden Fernsprecheinrichtung;
d) Einen Schaltungsteil zur Prüfling der Klingel- und Türöffnerfunktionalitat.

Erfindungsgemäß ist der Prüfadapter dabei so ausgebildet, daß bei der Prüfung der Funktionen des TFE-Adapters die als Türrufzielstelle dienende Fernsprechendeinrichtung in den Prüfvorgang einbezogen wird, und der Prüfadapter zur Bereitstellung der für den Betrieb seiner Schaltungsteile erforderlichen Versorgungsspannung eine Stabilisatorschaltung umfaßt, welche ihre stabilisierte Ausgangsspannung aus der Versorgungsspannung des TFE-Adapters gewinnt.
Es ist im Sinne der Erfindung, daß die einzelnen Schaltungsteile des Prüfadapters so ausgelegt sind, daß die Stromaufnahme des von der Versorgungsspannung des TFE-Adapters gespeisten Prüfadapters ein Äquivalent zu der am TFE-Adapter beim Anschluß und Betrieb der Funktionselemente der Türfreisprecheinrichtung wirkenden Last bildet. Vorteilhafterweise verfügt dabei die Stabilisatorschaltung aber außerdem über Mittel zum Schutz gegen eine durch einen Defekt im TFE-Adapter oder im Prüfadapter selbst verursachte Überlast. Hierbei kann es sich um eine einfache Schmelzsicherung oder um eine elektronische Sicherung handeln, durch die nach Spannungsfreischaltung eine automatische Wiedereinschaltung bewirkt wird.

Gemäß einer weiteren vorteilhaften Ausgestaltung der Erfindung ist der Stabilisatorschaltung ein Schaltungsteil zur Prüfling der zur Versorgung der übrigen Schaltungsteile bereitgestellten Ausgangsspannung nachgeschaltet. Dieser Schaltungsteil ist dabei so ausgebildet, daß insbesondere der der Prüfung der Sprechverbindung zwischen dem TFE-Adapter und der an die TK-Anlage angeschlossenen Fernsprechendeinrichtung dienende Schaltungsteil nur bei Feststellung einer korrekten Versorgungsspannung am Ausgang der Stabilisatorschaltung für die weitere Prüfung zugeschaltet wird. Die Prüfung der von der Stabilisatorschaltung bereitgestellten Spannung erfolgt somit unter verminderter Last und infolge dessen unter leerlaufähnlichen Bedingungen. Der Schaltungsteil ist dabei so ausgelegt, daß im Falle einer durch das Zuschalten der weiteren Schaltungsteile auftretenden überproportionalen Lasterhöhung und eines damit verbundenen Spannungsabfalls die Verbindung zu diesen Schaltungsteilen wieder unterbrochen wird. Ebenso wird diese Verbindung im Falle des Auftretens einer Überspannung am Ausgang der Stabilisatorschaltung wieder getrennt. Auf diese Weise ist sichergestellt, daß die Verbindung zum Schaltungsteil für die Prüfung der Sprechverbindung, getrennt wird, sobald am Eingang der Stabilisatorschaltung Spannungsverhältnisse oder an ihrem Ausgang Lastverhältnisse bestehen, bei denen die Stabilisatorschaltung nicht mehr in der Lage ist ihre Ausgangsspannung innerhalb des vorgesehenen Spannungsbereichs zu stabilisieren. Das Zuschalten des zur Prüfung der Sprechverbindung dienenden Schaltungsteils erfolgt gemäß einer moglichen Ausgestaltung der erfindungsgemaßen Prüfvorrichtung durch einen Relaiskontakt. Dieser wird im Falle des Unterschreitens eines Mindestspannungswertes oder des Überschreitens einer maximal zulässigen Spannung am Ausgang der Stabilisatorschaltung infolge der Auswertung des die Spannungsprüfung realisierenden Schaltungsteils durch das Abfallen des Relais wieder geöffnet. Bei einer vorteilhaften Weiterbildung der Vorrichtung wird das Vorhandensein einer korrekten Ausgangsspannung am Ausgang der Stabilisatorschaltung zudem für den die Prüfung vornehmenden Techniker akustisch oder visuell signalisiert. Eine Möglichkeit besteht darin sowohl das Vorhandensein einer Spannung innerhalb des vorgesehenen Spannungsbereiches als auch Unter- oder Überspannung durch verschiedenfarbige Leuchtdioden oder Signallampen zu visualisieren.
Entsprechend einer möglichen Ausgestaltung der erfindungsgemäßen Vorrichtung ist der zur Prüfling der Sprechverbindung zwischen dem TFE-Adapter und der als Türrufzielstelle fungierenden Fernsprechendeinrichtung dienende Schaltungsteil als ein Tongenerator aufgebaut, der durch die Annahme eines an dem Prüfadapter durch einen anderen Schaltungsteil simulierten Türruf aktiviert wird. Das Bestehen einer funktionsfähigen Sprechverbindung wird dann in dem Hörer der Türrufzielstelle durch den von dem Generator erzeugten Prüfton signalisiert.
Besonders vorteilhaft ist der Prüfadapter dann ausgebildet, wenn er einen Schaltungsteil besitzt, durch welchen die Betätigung des Türöffners an der Türrufzielstelle unmittelbar am Prüfadapter akustisch oder optisch signalisiert wird. Dies kann beispielsweise durch eine Leuchtdiode (LED) geschehen. Zweckmäßigerweise und dies ist insbesondere dann günstig, wenn die TK-Anlage und die Türrufzielstelle tatsächlich in größerer Entfernung voneinander beabstandet sind, verfügt der entsprechende Schaltungsteil über eine Speicherfunktion, so daß die LED nach erfolgreicher Betätigung des Türöffners für eine längere, vorgegebene Zeit leuchtet. So ist es einer prüfenden Person möglich, die Türöffnerfunktion an der Türrufzielstelle auszulösen und sich hinterher wieder zu der TK-Anlage zu begeben und dort an dem mit der TK-Anlage verbundenen Prüfadapter das erfolgreiche Auslösen des Türöffners zu überprüfen.
Der vorgeschlagene Prüfadapter zeichnet sich besonders durch seinen einfachen und kompakten Aufbau sowie durch eine einfache Handhabung aus. Besonders vorteilhaft ist dabei, daß er eine Vielzahl von Funktionen in sich vereinigt und bei der Prüfung nicht auf eine Spannungsfremdversorgung angewiesen ist, da die zu seinem Betrieb benötigte Spannung unmittelbar aus dem ohnehin zu prüfenden TFE-Adapter gewonnen wird. In vorteilhafter Weise wird damit gleichzeitig die Spannungs- und Lastprüfung des TFE-Adapters verbunden.

Nachfolgend soll die Erfindung anhand eines Ausführungsbeispieles näher erläutert werden. In der zugehörigen Zeichnung ist im einzelnen folgendes dargestellt.
- Fig.1:: Ein mögliches Gesamtschaltbild für den Prüfadapter,
- Fig.2:: Eine mögliche Ausbildung des als Stabilisatorschaltung wirkenden Schaltungsteil des Prüfadapters gemäß Fig. 1,
- Fig.3:: Eine mögliche Ausführung des Schaltungsteils zur Spannungsprüfung,
- Fig.4:: Eine mögliche Schaltung zur Überprüfung der Sprechverbindung zwischen dem TFE-Adapter und der Türrufzielstelle,
- Fig.5:: Der Schaltungsteil zur Überprüfung des Klingelkontakts gemäß der Ausbildung des Adapters nach Fig. 1,
- Fig.6:: Der Schaltungsteil zur Prüfung der Polarität der Leitungsadern a und b,
- Fig.7:: Das Schaltungsteil zur Prüfung der Funktionalität des Türöffners.

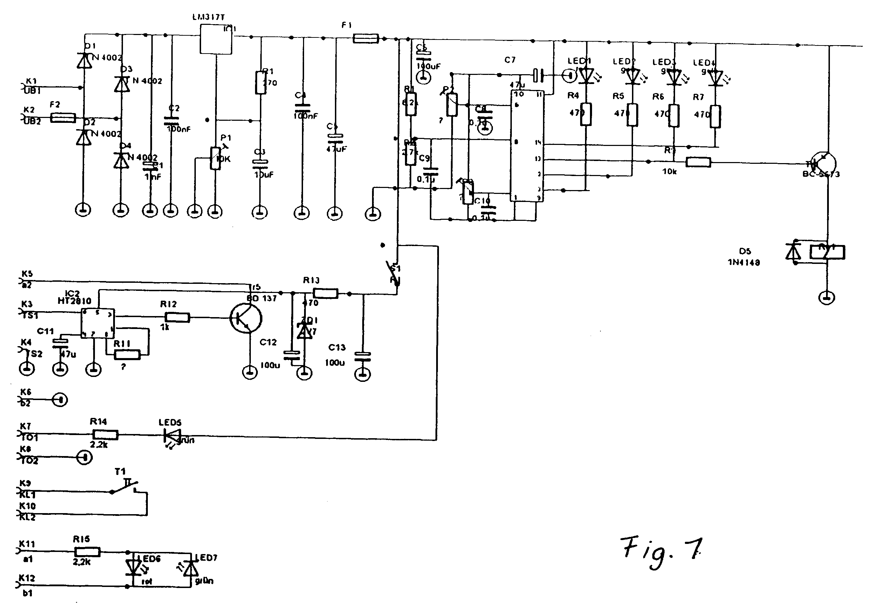

In der Fig. 1 ist ein mögliches Gesamtschaltbild zum Aufbau des erfindungsgemäßen Prüfadapters dargestellt. Die Schaltung umfaßt einen Schaltungsteil zur Bereitstellung einer stabilisierten Spannung, einen Schaltungsteil zur Überprüfung der Ausgangsspannung der Stabilisatorschaltung, einen Schaltungsteil zur Prüfung der Sprechverbindung zwischen dem TFE-Adapter und einer Türrufzielstelle, einen Schaltungsteil zur Überprüflang der Klingelkontakterkennung sowie einen Schaltungsteil zur Überprüfung der Polarität der Leitungsadern a und b.

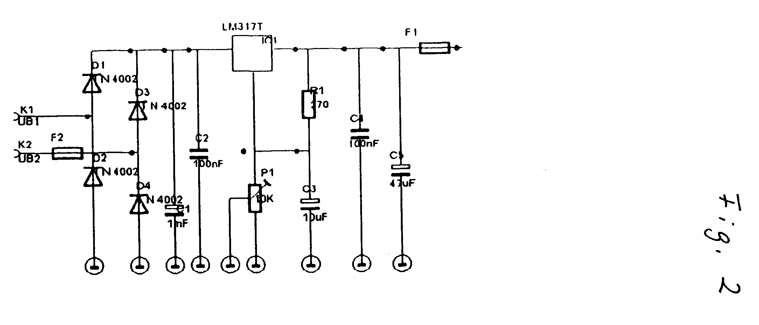

In der Fig. 2 ist die Stabilisatorschaltung nochmals als Einzelheit dargestellt. In dem gewählten Beispiel wird die von dem TFE-Adapter abgenommene Betriebsspannung U_{B} einer Gleichrichterschaltung (Dioden D1-D4) zugeführt und die gleichgerichtete Spannung durch einen Schaltkreis, vorliegend vom Typ LM317T mit entsprechender Außenbeschaltung auf 12 V stabilisiert. Um eine Zerstörung von Schaltungsteilen im Falle einer auftretenden Überlast zu verhindern, ist am Eingang der Stabilisatorschaltung eine Schmelzsicherung F2 vorgesehen. Die stabilisierte Ausgangsspannung steht zwischen dem Ausgang des Schaltkreises und der Schaltungsmasse an.

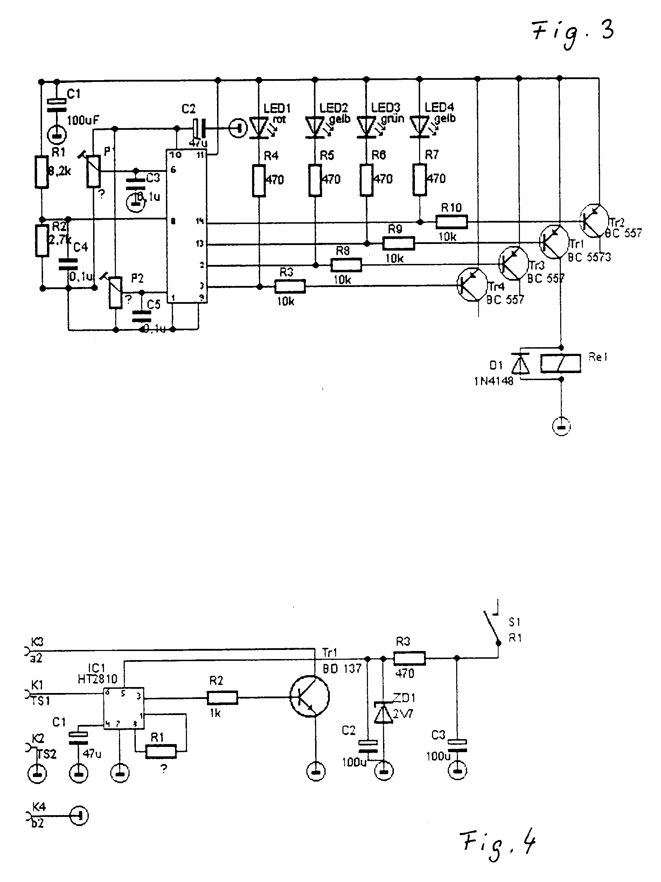

Durch die Fig. 3 ist eine Schaltungsanordnung wiedergegeben, welche die Überprüfung der von der Stabilisatorschaltung gelieferten Spannung ermöglicht. Die Schaltung ist als Fensterdiskriminator ausgebildet und arbeitet mit einem Schaltkreis des Typs TCA 965. Sie dient der Feststellung der Gültigkeit der Spannung, wobei die Gültigkeit gegeben ist, wenn die Spannung einem Wert innerhalb eines Spannungsfensters, vorliegend beispielsweise 12 - 16 V, entspricht.
Die zu messende Spannung wird über den Spannungsteiler R2, R3 an das Pin 8 des Schaltkreises angelegt. Über P2 und P3 wird das als gültig bewertete Spannungsfenster eingestellt (hier > 12 V, < 16 V). Der Baustein bietet an Pin 10 eine stabilisierte Spannung an, so daß das Spannungsfenster auch bei wechselnder Eingangsspannung genau bleibt. Liegt die Eingangsspannung an Pin 8 innerhalb dieses Fensters, so führt das Pin 13 des Schaltkreises "Low"-Pegel. Dadurch wird die LED 3 (grün) angeschaltet, gleichzeitig wird über den Transistor TR1 ein Relais geschaltet, mit dessen Kontakt die restliche Schaltung aktiviert wird.
Liegt die an Pin 8 angelegte Spannung außerhalb des eingestellten Fensters, so führt das Pin 3 des Schaitkreise "Low"-Pegel wodurch die LED 1 (rot) angeschaltet wird.
Oberhalb des Spannungsfensters führt neben dem Pin 3 auch das Pin 11 "Low"-Pegel, so daß die LED 4 (gelb) leuchtet. Bei Spannungen unterhalb des Spannungsfensters wird ab ca. 7,5 V zusätzlich zu Pin 3 auch LED 2 (gelb) über Pin 2 aktiviert.
Bei Versorgungsspannungen der Schaltung, die unter ca. 7,5 V liegen, erfolgt keine Anzeige an den LED's, weil die Spannung nicht für den Betrieb der Schaltung ausreicht. Nur im Falle dessen, daß sich die Spannung im vorgegebenen Bereich befindet und die grüne LED 3 leuchtet, zieht das Relals Re1 an und schaltet den zur Überprüfung der Sprechverbindung zwischen dem TFE-Adapter und der Türrufzielstelle dienenden Schaltungsteil zu. Durch diese Auslegung ist gewährleistet, daß die Überprüfung der von der Stabilisatorschaltung abgegebenen Spannung bei verminderter Last und somit annähernd bei Leerlaufbedingungen erfolgt.
Die Fig. 4 verdeutlicht den Aufbau des Schaltungsteils zur Kontrolle der Sprechverbindung. Der Schaltungsteil erhält über S1 seine Versorgungsspannung.

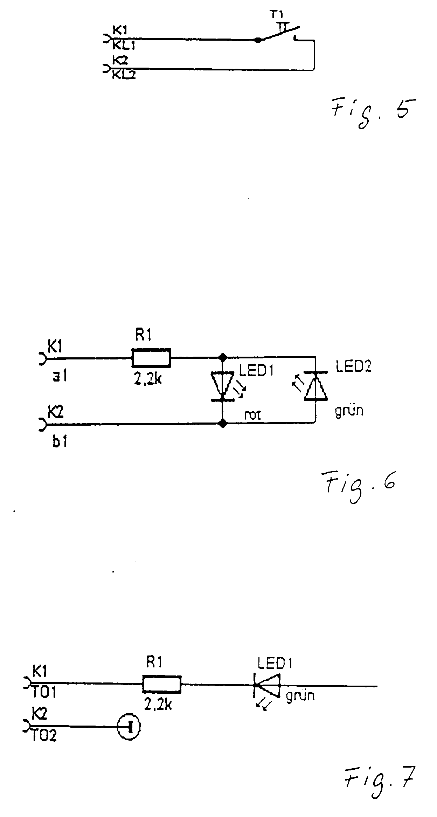

Der integrierte Baustein HT 2810 erzeugt ein Tonsignal welches über TR5 an den Klemmen K3 und K4 (Hör- und Sprechweg) anliegt. Über R11 wird lediglich der erzeugte Ton im Klang verändert. Mit ZD1 wird die Versorgungsspannung auf 2,7 V begrenzt. Über die Kontakte K1 und K2 wird das Tonsignal aktiviert und ist ca. 5 Sekunden hörbar. Der Tongenerator wird nur im Falle einer Annahme des Türzielrufs an der mit der TK-Anlage gekoppelten hierzu dienenden Fernsprechendeinrichtung aktiviert. Die einer Annahme des Türrufs vorausgehende Simulation des Drückens der
Klingeltaste wird durch den Schaltungsteil gemäß Fig. 5 realisiert. Hierbei handelt es sich lediglich um einen Taster, welcher anstelle des Klingelkontaktes die entsprechenden Kontakte KL1 und KL2 des TFE-Adapters miteinander kurzschließt. Auch der Schaltungsteil zur Überprüfung der Polarität der Leitungsadern a1 und b1 (Fig. 6) ist, wie sich aus der Abbildung ergibt, sehr einfach gestaltet. Die Funktion wird vorliegend durch eine Zweifarbdiode mit dem vorgeschalteten Widerstand realisiert. Das Auslösen des Türöffners nach der Annahme eines Rufs an der Fernsprechendeinrichtung wird gemäß des in der Fig. 7 dargestellten Schaltungsteils ebenfalls durch eine LED signalisiert. Gemäß einer möglichen bereits dargestellten verbesserten Variante kann dieser Schaltungsteil in der Weise erweitert sein, daß das Signalisieren des ausgelösten Türöffners für eine gewisse Zeit gespeichert wird und somit über einen längeren Zeitraum hinweg noch an der entsprechenden LED sichtbar ist. Selbstverständlich ist die konkrete Schaltung hinsichtlich der Verbindung mit den
einzelnen Kontakten der Türfreisprecheinrichtung an deren jeweiligen Typ anzupassen.

## Patentansprüche

1. Vorrichtung zum Prüfen der Funktionsfähigkeit einer Türfreisprecheinrichtung (TFE), welche als ein mit einer TK-Anlage verbundener TFE-Adapter mit Kontakten zum Anschluß einzelner Funktionselemente wie Klingeltaster, Türlautsprecher und Türöffnerkontakt ausgebildet ist, dadurch gekennzeichnet, daß die Vorrichtung als ein Prüfadapter ausgebildet ist, der unmittelbar mit den dem Anschluß der Funktionselemente am TFE-Adapter dienenden Kontakten verbindbar ist und in sich zumindest Schaltungsteile zur Polaritätsprüfung der von der TK-Anlage auf Kontakte des TFE-Adapters durchgeschalteten Fernsprechadern a, b, zur Last- und Versorgungsspannungsprüfung, zur Prüfung der Sprechverbindung zwischen dem TFE-Adapter und einer an die TK-Anlage angeschlossenen Fernsprechendeinrichtung sowie zur Prüfung der Klingel- und Türöffnerfunktionalität vereinigt, wobei bei der Prüfung der Funktionen des TFE-Adapters die Einbeziehung der als Türrufzielstelle dienenden Fernsprechendeinrichtung vorgesehen ist und der Prüfadapter zur Bereitstellung der für den Betrieb seiner Schaltungsteile erforderlichen Versorgungsspannung eine Stabilisatorschaltung umfaßt, welche ihre stabilisierte Ausgangsspannung aus der Versorgungsspannung des TFE-Adapters gewinnt.

2. Vorrichtung nach Anspruch 1, dadurch gekennzeichnet, daß die Schaltungsteile des Prüfadapters so ausgelegt sind, daß die Stromaufnahme des von der Versorgungsspannung des TFE-Adapters gespeisten Prüfadapters ein Äquivalent zu der am TFE-Adapter beim Anschluß und Betrieb der Funktionselemente der Türfreisprecheinrichtung wirkenden Last bildet.

3. Vorrichtung nach Anspruch 2, dadurch gekennzeichnet, daß in der Stabilisatorschaltung Mittel zum Schutz gegen eine durch einen Defekt im TFE-Adapter oder im Prüfadapter verursachte Überlast vorgesehen sind.

4. Vorrichtung nach einem der Ansprüche 1 bis 3, dadurch gekennzeichnet, daß der die Schaltungsteile des Prüfadapters versorgenden Stabilisatorschaltung ein Schaltungsteil zur Prüfung der von der Stabilisatorschaltung zur Versorgung der übrigen Schaltungsteile bereitgestellten Ausgangsspannung nachgeschaltet und so ausgebildet ist, daß insbesondere der der Prüfung der Sprechverbindung zwischen dem TFE-Adapter und der an die TK-Anlage angeschlossenen Fernsprechendeinrichtung dienende Schaltungsteil nur bei Feststellung einer korrekten Versorgungsspannung am Ausgang der Stabilisatorschaltung für die weitere Prüfung zugeschaltet wird, so daß die Prüfung der Spannung unter verminderter Last unter leerlaufähnlichen Bedingungen erfolgt.

5. Vorrichtung nach Anspruch 4, dadurch gekennzeichnet, daß das Zuschalten des Schaltungsteils durch einen beim Vorhandensein einer korrekten Spannung von dem die Spannung prüfenden Schaltungsteil betätigten Relaisschaltkontakt erfolgt.

6. Vorrichtung nach Anspruch 4 oder 5, dadurch gekennzeichnet, daß das Vorhandensein eines korrekten Spannungswertes durch den Schaltungsteil akustisch oder visuell signalisiert wird.

7. Vorrichtung nach Anspruch 6, dadurch gekennzeichnet, daß in dem Schaltungsteil zur Visualisierung des Anliegens des korrekten Spannungswertes sowie darüber oder darunter liegender Spannungswerte mehrere mit den Ausgängen eines Spannungsdiskriminators verbundene, jeweils parallelgeschaltete, verschiedenfarbige Leuchtdioden oder Signallampen vorgesehen sind

8. Vorrichtung nach einem der Ansprüche 1 bis 7, dadurch gekennzeichnet, daß zur Prüfung der Sprechverbindung zwischen dem TFE-Adapter und der an die TK-Anlage angeschlossenen, als Türrufzielstelle fingierenden Fernsprechendeinrichtung ein Schaltungsteil mit einem Tongenerator vorgesehen ist, der durch die Annahme eines an dem Prüfadapter durch einen anderen Schaltungsteil simulierten Türruf aktiviert wird und einen Prüfion an die Türrufzielstelle aussendet.

9. Vorrichtung nach einem der Ansprüche 1 bis 8, dadurch gekennzeichnet, daß an dem Prüfadapter Mittel vorgesehen sind, durch welche die Ausgabe eines Türöffnersignals vom TFE-Adapter aufgrund der Betätigung des Türöffners an der Türrufzielstelle unmittelbar am Prüfadapter akustisch oder optisch signalisiert wird.

10. Vorrichtung nach Anspruch 9, dadurch gekennzeichnet, daß zur Prüfung der Ausgabe eines Türöffnersignals vom TFE-Adapter aufgrund der Betätigung des Türöffners an der Türrufzielstelle eine Leuchtdiode vorgesehen ist, die nach erfolgreicher Betätigung des Türöffners für eine vorgegebene Zeitdauer leuchtet.
